# EUROPÄISCHE PATENTSCHRIFT

(11) **EP 0 488 947 B1**
(45) Veröffentlichungstag und Bekanntmachung des Hinweises auf die Patenterteilung: **15.02.1995**
(21) Anmeldenummer: 91810895.2
(22) Anmeldetag: 18.11.1991
(51) Int. Cl.: G01N 21/05, G01N 27/26

(54) **Detektorzelle**
Detector cell
Cellule détectrice

(30) Priorität: 26.11.1990 CH 3741/90
(43) Veröffentlichungstag der Anmeldung: 03.06.1992
(73) Patentinhaber: CIBA-GEIGY AG, 4002 Basel (CH)
(72) Erfinder: Manz, Andreas, Dr., CH-4056 Basel (CH); Verpoorte, Elisabeth, Dr., CH-4057 Basel (CH)

(56) Entgegenhaltungen:
- EP-A- 0 347 579
- WO-A-88/01376
- DE-A- 2 060 865
- US-A- 4 471 647
- US-A- 4 908 112

## Beschreibung

Die Erfindung betrifft eine Detektorzelle insbesondere zur Absorptionsmessung von ultravioletter und/oder sichtbarer Strahlung gemäss Oberbegriff des Patentanspruchs 1.

Detektorzellen für die Messung von Absorptionen einer Probe im ultravioletten (UV) und/oder sichtbaren Bereich des elektromagnetischen Spektrums werden in grosser Zahl in der analytischen Chemie verwendet. Gegebenenfalls erfolgen auch Messungen von angeregten Fluoreszenzen, Chemilumineszenz oder von Absorptionen im infraroten (IR) Bereich des Spektrums. Neben Anwendungen in der Probenmesstechnik, der Umweltanalytik, der medizinischen Diagnostik kommen Detektorzellen für Absorptionsmessungen insbesondere auch bei analytischen Trennmethoden wie beispielsweise der Flüssigchromatographie (liquid chromatography LC), der Kapillarelektrophorese (capillary electrophoresis CE), der superkritischen Flüssigchromatographie (supercritical fluid chromatography SFC) oder der Fliess-Injektions-Analyse (FIA) verstärkt zum Einsatz. Ueblicherweise sind derartige Detektorzellen als Durchflusszellen ausgebildet. Diese weisen eine Eintrittsöffnung für die zu analysierende Probe auf, sowie eine Auslassöffnung, die vielfach der Eintrittsöffnung etwa gegenüberliegt. Eine dazwischen angeordnete Messkammer ist meist mit zwei einander gegenüberliegenden Messfenstern ausgestattet. Ueber eines der Messfenster wird eine Strahlung auf die durch die Durchflusszelle strömende Probe eingestrahlt und nach Durchlaufen der Probe am gegenüberliegenden Messfenster aufgefangen und detektiert. Derartige Messzellen sind beispielsweise in der US-A-3,810,695 oder auch in der US-A-4,243,883 beschrieben. Sie sind für den on-line Einsatz bei Produktionsanlagen und ähnlichem mehr vorgesehen und weisen relativ grosse Volumina der Messkammer auf. Für den Einsatz bei analytischen Trennmethoden sind diese Durchflusszellen aber nicht geeignet, da es aufgrund der grossen Volumina der Messkammer zu erneuten Vermischungen und unkontrollierbaren Verbreiterungen der aufgetrennten Probenkomponenten im Trägermedium kommen würde.

Der Wunsch nach einer Verkleinerung der Messvolumina führte daher zu der Entwicklung von sogenannten Durchflussküvetten. Diese stellen im wesentlichen eine Verkleinerung der bekannten Durchflusszellen dar. Derartige Küvetten haben üblicherweise Messvolumina von einigen Hunderten von Nanolitern bis zu wenigen Millilitern. Messzellen dieses Typs sind beispielsweise in einer Publikation von Edward S. Yeung und Robert E. Synovec in Analytical Chemistry, Vol. 58, No. 12, October 1986, Seiten 1237A- 1256A beschrieben. Durch eine geeignete Ausbildung des Durchflussbereiches - im beschriebenen Ausführungsbeispiel etwa Z-förmig - und eine etwa schräge Durchstrahlung der Probe im Messzellenbereich wird dafür gesagt, dass der Messstrahl einen möglichst langen Weg in der Probe zurücklegt, um eine möglichst grosse Absorptionswahrscheinlichkeit zu erreichen. Trotz dieser Massnahmen führen derartig ausgebildete Detektorzellen nicht zu den erwünschten Ergebnissen mit der erwünschten Auflösung und Genauigkeit.

Eine alternative Art von Detektorzellen stellen die sogenannten "on-column"-Detektoren dar. Bei diesen Detektorzellen wird ein Stück einer Kapillare bzw. die Kapillare des genannten Analysesystems selbst als Begrenzung des Messvolumens verwendet. Eine derartige Messzelle ist beispielsweise in der EP-A-0,326,511 beschrieben. Diese umfasst eine Kapillare die in einer zweiteiligen Halterung fixiert ist. Das Messlicht wird durch dafür vorgesehene Oeffnungen in der Halterung senkrecht zur Kapillarenachse eingestrahlt und der transmittierte Anteil des Messlichtes auf der gegenüberliegenden Seite der Kapillare wieder aufgefangen und detektiert. Ueblicherweise wird das Messlicht einer ausserhalb der Messzelle angeordneten Messlichtquelle über Lichtfaserleiter an die Kapillare herangeführt und auch wieder auf diese Weise abgeführt. Als Messlichtquellen kommen die üblichen spektroskopischen Lichtquellen aber auch kohärente Lichtquellen-Laser-zum Einsatz. Zwar sind die Volumina des Messbereiches derartiger "Mikro"-Durchflusszellen sehr klein, typischerweise im Bereich einiger Nanoliter, jedoch sind der Nachweisgrenze (definiert als die kleinste messbare Konzentration des eluierten Probenmoleküls) durch die kleine Wechselwirkungsstrecke, die ja im wesentlichen dem Innendurchmesser der verwendeten Kapillare entspricht, Grenzen gesetzt. Typischerweise betragen die Innendurchmesser der Kapillaren etwa 10 »m bis 50 »m.

Um diesem Nachteil bei den sogenannten "on-column"-Detektoren abzuhelfen, wird von Xiaobing Xi und Edward S. Yeung in Analytical Chemistry, 1990, 62, Seiten 1580-1585 oder auch in der EP-A-0,089,157 vorgeschlagen, das Messlicht eine Laserquelle in Durchflussrichtung durch die Kapillare zu leiten. Auf diese Weise wird die Wechselwirkungswegstrecke gegenüber der Methode, bei der das Licht senkrecht zur Kapillarenachse eingestrahlt wird, um bis zu einen Faktor 1000 verlängert.

Allerdings wird bei dieser vorgeschlagenen Methode das Messlicht beim Durchtritt durch die relativ lange Kapillare nicht nur durch Absorptionen der Probe geschwächt, sondern es kommt zu Streuprozessen in der Kapillare, oft werden auch Teile des Messlichtes von der Kapillarwand absorbiert und somit das Messergebnis verfälscht.

Der Trend bei den analytischen Trennmethoden, wie beispielsweise die bereits zuvor ausgeführte LC, CE oder SFC, geht aber in Richtung verkleinerter Probenvolumina und somit insbesondere auch verkleinerter Volumina der Messkammer bzw. des Messbereiches der Detektorzellen. Beispielsweise werden bei Trennmethoden Kapillaren mit nur mehr etwa 5 »m Durchmesser eingesetzt. In biotechnologischen Anwendungen sind auf diese Weise kleinste Mengen einer Probe, sogar bis in den Bereich einzelner Zellen nachweisbar. Geht man davon aus, dass bei Kapillarendurchmessern der Trennkolonne von etwa 1 mm das Volumen der Messkammer der Detektionszelle weniger als 10 »l betragen sollte, um unerwünschte Ausbreitungen und erneute Vermischungen der getrennten Substanzen zu vermeiden, so ist einsichtig, dass beim Uebergang auf Kapillarendurchmesser von 10 »m oder weniger das Volumen der Messkammer der Detektorzelle im Bereich von etwa 1 nl oder weniger liegen sollte.

Die EP-A-0 347 579 offenbart eine mikromechanische Struktur aus halbleitenden Material, in das Kavitäten, Öffnungen, Kanäle und Behälter geätzt sind. Diese Struktur ist zur Aufnahme, Untersuchung und Behandlung von Proben geeignet und die Merkmale der Ausfuhrungsform gemäß der Figur 8 bildenden Oberbegriff des Anspruchs 1.

Da die bislang bekannten Detektorzellen entweder nicht für derartig geringe Volumina der Messkammer ausgelegt sind, oder aufgrund der kurzen Wechselwirkungswege des Messlichtes mit der zu analysierenden Probe eine zu schlechte Nachweisgrenze aufweisen oder aufgrund von Streuprozessen in der Kapillare oder Absorptionen in der Kapillarenwand zu falschen Ergebnissen führen, ist es eine Aufgabe der vorliegenden Erfindung, eine Detektorzelle zu schaffen, welche einerseits das erforderliche kleine Volumen der Messkammer aufweist und andererseits eine ausreichend lange Wechselwirkungsstrecke des Messlichtes mit der Probe besitzt. Die Detektorzelle soll einfach anwendbar sein und insbesondere auch in miniaturisierte Trennapparaturen einsetzbar sein. Abgesehen von ihrer möglichst kompakten Bauweise soll die Detektorzelle möglichst einfach, reproduzierbar und kostengünstig herstellbar sein. Die Messkammer der Detektorzelle soll das Messlicht nicht absorbieren. Die Länge der Wechselwirkungsstrecke des Messlichtes mit der Probe - die optische Weglänge - soll reproduzierbar sein. Darüber hinaus besteht auch der Wunsch nach einer kleinen Detektorzelle, die ein kontinuierliches Messverfahren erlaubt.

All diese und noch weitere Aufgaben werden durch eine Detektorzelle gemäss des Patentanspruches 1 gelöst. Weitere besonders bevorzugte Ausführungsvarianten der erfindungsgemässen Detektorzelle sind Gegenstand der abhängigen Patentansprüche. Im folgenden wird die erfindungsgemässe Detektorzelle anhand eines in den Zeichungen dargestellten Ausführungsbeispieles näher erläutert. Es zeigen in schematischer Darstellung:
- Fig. 1: Ein analytisches Fliess-Injektions-Analyse- und/oder Trennsystem mit einer erfindungsgemässen Detektorzelle,
- Fig. 1a: die Detektorzelle Ia der Fig. 1, vergrössert,
- Fig. 2: das Deckelteil der Detektorzelle in Aufsichtsdarstellung,
- Fig. 3: das Basisteil der Detektorzelle in Aufsichtsdarstellung und
- Fig. 4: einen Schnitt durch die Wechselwirkungsstrecke einer zusammengestzten Detektorzelle gemäss Schnittlinie IV-IV in Fig. 3.

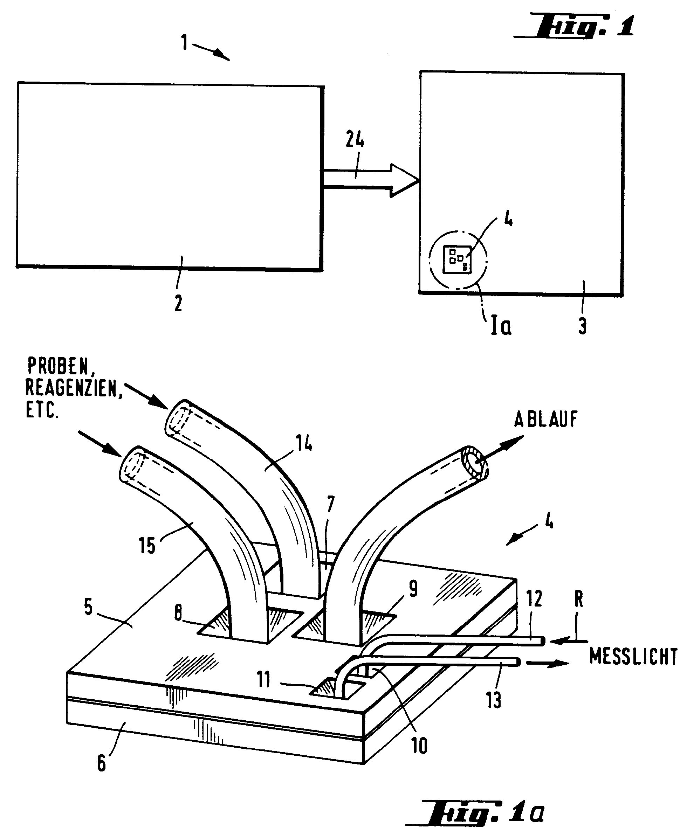

Ein in Fig. 1 beispielsweise dargestelltes analytisches System zum Einsatz in der Flüssigchromatographie (LC), der Kapillarelektrophorese (CE), der Superkritischen Flüssigchromatographie (SFC) oder der Fliess-Injektions-Analyse (FIA) ist gesamthaft mit dem Bezugszeichen 1 versehen. Es umfasst im wesentlichen eine Fliess-Injektions-Analyse- und/oder Trennstation 2 und ein Detektionssystem 3. Die Fliess-Injektions-Analyse- und/oder Trennstation 2 und das Detektionssystem 3 können wie dargestellt zwei getrennte bauliche Einheiten sein, die mit Leitungen 24 verbunden sind, sie können selbstverständlich aber auch zu einer einzigen Vorrichtung zusammengefasst sein. Das Detektionssystem 3 enthält neben den üblichen Bestandteilen, wie beispielsweise einer Messlichtquelle, lichtelektrischen Wandlern, vorzugsweise elektronischen Registriervorrichtungen, Pumpen etc. (allesamt nicht dargestellt), auch eine erfindungsgemässe Detektorzelle 4. Die Detektorzelle 4 ist vorzugsweise zweiteilig aufgebaut. Sie umfasst ein Basisteil 6 und ein Deckelteil 5. Zuführleitungen 14,15, vorzugsweise Kapillaren , für die Probe und etwaige weitere Reagenzien und ähnliches, sowie eine Abführleitung 16 für die Probe bzw. das Proben-Reagenzien Gemisch münden in Anschlussöffnungen im Deckelteil 5. Zwei Lichtfaserleiter 12, 13 münden in dafür vorgesehene Anschlussöffnungen im Deckelteil 5 und dienen zur Zu- und Ableitung des Messlichtes.

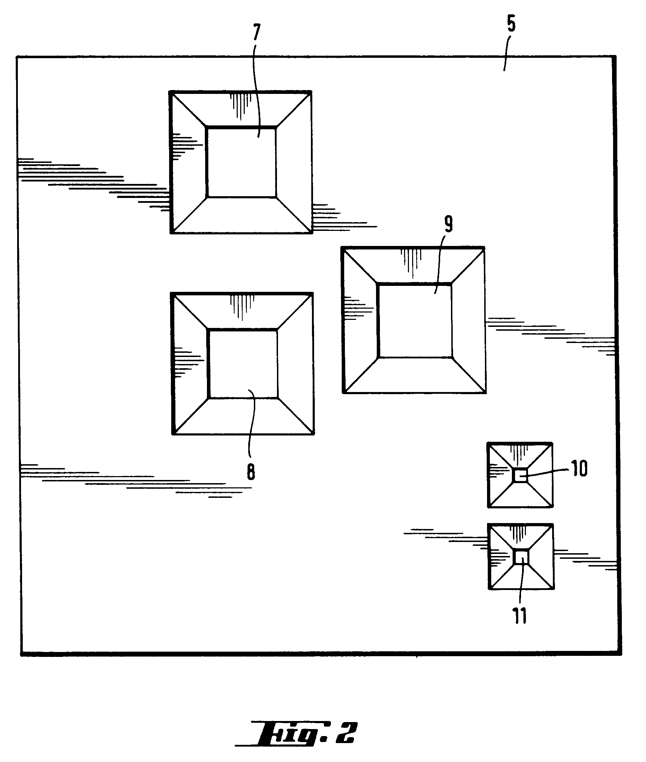

In Fig. 2 ist das Deckelteil 5 in vergrössertem Massstab dargestellt. Deutlich erkennbar sind die Anschlussöffnungen 7, 8 und 9 für die Kapillaren 14, 15, 16, über die die Probe und ggf. weitere Reagenzien in die Detektorzelle 4 eingebracht bzw. wieder aus ihr abgeführt werden. Die Anschlussöffnungen 7, 8, 9 sind vorzugsweise als Einstecköffnungen derart ausgebildet, dass eine eingesteckte Kapillare 14, 15 bzw. 16 ohne zusätzliche Fixiermittel festsitzt. Vorzugsweise weisen die Kapillaren Aussendurchmesser von etwa 50 »m bis etwa 1000 »m auf. Insbesondere kann sich der Querschnitt der Einstecköffnungen 7, 8, 9 wie dargestellt über die Höhe des Deckelteils 5 nach unten verjüngen, so dass sich, wie an der Aufsichtsdarstellung der Fig. 2 gezeigt, ein pyramidenstumpfartiger Verlauf der Oeffnungen ergibt. Im Falle etwa kreisförmiger Oeffnungen ergibt sich eine kegelstumpfförmige Form derselben. Dabei sollte der kleinste Querschnitt der Einstecköffnungen 7, 8, 9 etwa dem Innenquerschnitt der verwendeten Kapillaren 14, 15, 16 entsprechen. Die Einstecköffnungen 10 und 11 für die Lichtfaserleiter 12 bzw. 13 sind analog ausgebildet, allerdings weisen sie üblicherweise einen geringeren Querschnitt auf. Auch hier ist der sich von oben nach unten über die Höhe des Deckelteils 5 verjüngende Oeffnungsquerschnitt deutlich ersichtlich. Wie im Falle der Einstecköffnungen 7, 8, 9 für die Kapillaren 14, 15, 16 sollte auch bei den Einstecköffnungen 10, 11 für die Lichtfaserleiter 12, 13 der kleinste Querschnitt etwa dem Querschnitt des Licht-leitenden Kerns der Faser entsprechen. Die Einstecköffnungen 7, 8, 9, 10, 11 können aber auch stufenförmig verjüngt ausgebildet sein oder einen konstanten Durchmesser aufweisen.

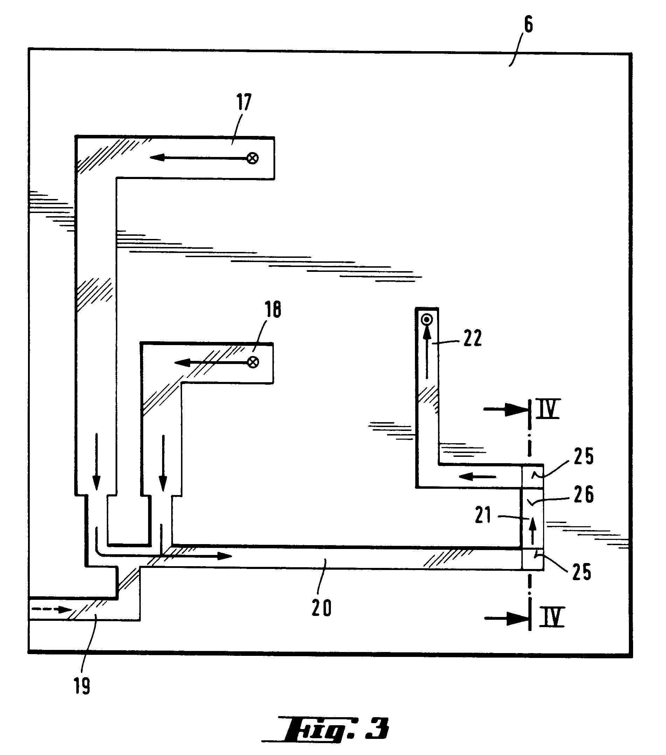

Das in Fig. 3 dargestellte zugehörige Basisteil 6 weist eine Reihe von Kanälen auf, die untereinander verbunden sind. Zwei Zuführkanäle 17 und 18 stehen im zusammengestzten Zustand der Detektorzelle 4 mit den Anschlussöffnungen 7 bzw. 8 für die Kapillaren 14 und 15 in Verbindung und münden in ein Kanalstück 20. Ein weiterer Kanal 19 kann wie dargestellt in das Kanalstück 20 münden und an dem Basiteil 6 eine direkte Verbindung des Systems von Kanälen nach aussen bilden. Das Kanalstück 20 mündet in ein Kanalstück 21, welches die noch näher zu erläuternde Wechselwirkungsstrecke darstellt. Schliesslich schliesst noch ein Kanalstück 22 an, welches bei zusammengesetzter Detektorzelle 4 mit der Einstecköffnung 9 für die Ableitkapillare 16 in Verbindung steht. Gemäss der Darstellung in Fig. 3 weisen die Zuführkanäle 17 bzw. 18 grössere Abmessungen auf als das Kanalsystem 20-21-22. Auf diese Weise ausgebildet stellen die Zuführkanäle 17 und 18 eine Art Reservoir für die üblicherweise mit Hilfe von peristaltischen Pumpen durch die Detektorzelle 4 gepumpte Probe bzw. für zusätzliche Reagenzien dar. Durch den kleineren Querschnitt des Kanalsystems 20-21-22 baut sich in den Zufuhrkänalen 17, 18 ein geringer Druck auf, der auch bei geringfügig schwankenden Pumpleistungen einen kontinuierlichen Transport der Medien durch die Detektorzelle 4 gewährleistet. Auch werden durch diese Pufferfunktion der Zufuhrkanäle 17, 18 mit grösserem Querschnitt Stosswellen, die in den transportierten Medien aufgrund der Bewegung von Kolben oder Membranen der Pumpen entstehen, weitgehend aufgefangen. Der nach aussen führende Kanal 19 weist hingegen den gleichen Querschnitt auf wie das Kanalsystem 20-21-22. Er wird beispielsweise dann zum Einspeisen der Probe verwendet, wenn derartige Effekte keine Rolle spielen oder erst gar nicht auftreten aufgrund andersartiger Transportmethoden für die Probe, beispielsweise mit Hilfe von elektrischen Feldern.

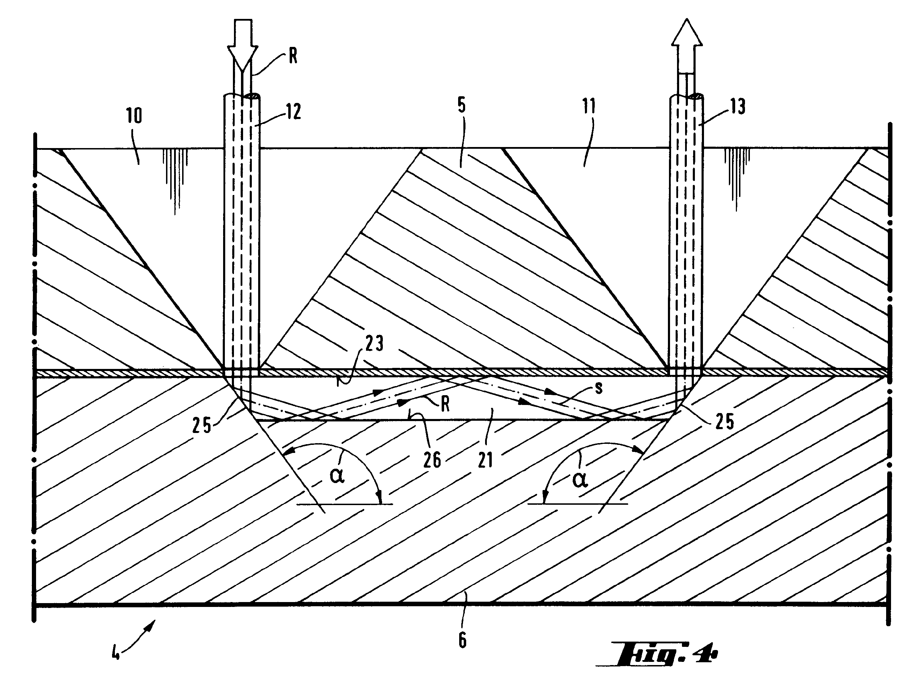

Fig. 4 zeigt eine Schnittdarstellung des Kanalstücks 21 gemäss Schnittlinie IV-IV in Fig. 3. Insbesondere ist dieses Kanalstück, welches ja den eigentlichen Wechselwirkungsbereich für das Messlicht R mit der zu untersuchenden Probe bildet, im zusammengesetzten Zustand der Detektorzelle 4 dargestellt. Es ist deutlich ersichtlich, dass das vorzugsweise gerade verlaufende Kanalstück 21 an seinen beiden Enden mit den Einstecköffnungen 10 und 11 für die beiden Lichtfaserleiter 12 und 13 in Verbindung steht. Weiter ist auch die bereits angeführte, sich im Querschnitt von oben nach unten über die Höhe des Deckelteils 5 verjüngende Form der Einstecköffnungen 10 und 11 gut erkennbar. Zwei eingesteckte Lichtfaserleiter 12 und 13 sind angedeutet. Die Ausbildung des Kanalstücks 21, des eigentlichen Wechselwirkungsbereiches, ist derart, dass die stirnseitigen Seitenwände 25 des Kanalstücks 21 mit dem Boden 26 des Kanalstücks 21 einen Winkel α von etwa 90° bis etwa 180°, insbesondere von etwa 110° bis etwa 150° einschliessen. Ueblicherweise sind auch die Längsseitenwände des Kanalstücks 21 unter einem ähnlichen Winkel gegenüber dem Kanalboden geneigt.

Gleichfalls ist in Fig. 4 angedeutet, dass die Unterseite des Deckelteils 5, das ist die Seite, die dem Kanalboden 26 zugewandt ist, zumindest im Bereich des als Wechselwirkungsbereich dienenden Kanalabschnittes 21 mit einer Reflexionsschicht 23 beschichtet ist. Auch die stirnseitigen Seitenwände 25 des Kanalstücks 21 und der Kanalboden 26 weisen gut reflektierende Oberflächen auf. Dies kann gleichfalls durch eine geeignete Beschichtung erzielt werden. Es kann aber auch ein sehr gut reflektierendes Material für die Herstellung des Basisteils 6 verwendet werden.

Das Volumen des durch die beschichtete Unterseite des Deckelteils 5 nach oben begrenzten Kanalstücks 21 beträgt vorzugsweise etwa 25 fl bis etwa 1 »l. Bei einer Kanaltiefe von etwa 0,5 »m bis etwa 500 »m ergibt sich daraus eine Kanalquerschnittsfläche des Kanalstückes 21 von etwa 0,25 »m² bis etwa 0,25 mm². Messlicht R, das über die in die Anschlussöffnung 10 eingesteckte Lichtfaser 12 eingestrahlt wird, trifft auf die eingangsseitige geneigte stirnseitige Seitenwand 25 des Kanalstücks 21 und wird von dort zum Kanalboden 26 reflektiert. Gemäss den Reflexionsgesetzen wird das Messlicht R vom Kanalboden 26 zur Reflexionsschicht 23 auf der Unterseite des Deckelteils 5 reflektiert, von dort wieder zum Kanalboden 26 usw. Nach mehreren Reflexionen gelangt das Messlicht R zur zweiten stirnseitigen Seitenwand 25 des Kanalstücks 21 und wird von dort in Richtung der Anschlussöffnung 11 reflektiert und in die eingesteckte Lichtfaser 13 eingekoppelt und weggeleitet. Durch diese Mehrfachreflexionen wird die Wechselwirkungsstrecke des Messlichtes R deutlich verlängert, insbesondere erhält man auf diese Weise bei Längen des Kanalstückes von etwa 100 »m bis etwa 5 cm und bei einer Kanaltiefe von etwa 0,5 »m bis etwa 500 »m Wechselwirkungsstreckens, das heisst optische Längen, von etwa 0,1 mm bis etwa 10 cm.

In der Anwendung der Detektorzelle 4 werden eine Probe und ggf. weitere. Reagenzien über die Anschlussöffnungen 7, 8, 9 oder 19 in die Detektorzelle 4 eingebracht. Durch einen Vorlauf wird sichergestellt, dass die Detektorzelle gefüllt ist. Die Lichtfaserleiter 12 und 13 können in den trichterförmigen Einstecköffnungen 10 und 11 bezüglich der relativen Lage ihrer Lichteintritts- bzw. Lichtaustrittsenden zu den ein- und ausgangsseitigen stirnseitigen Seitenwänden 25 ders Kanalstücks 21 variiert werden und auf diese Weise Brechungseffekte der flüssigen Probe kompensiert werden. Insbesondere wird der Einstrahlwinkel des Messlichtes R auf diese Weise solange variiert, bis ein maximaler Signalpegel erreicht ist. Selbstverständlich kann diese "Kalibrierung" auch durch Veränderung der Lage der Lichtaustrittslichtfaser 13 erfolgen, oder aber auch durch Veränderung der Lage beider Lichtfaserleiter 12 und 13. Nach diesen vorbereitenden Massnahmen kann die eigentliche Absorptionsmessung erfolgen.

Vorzugsweise werden das Deckelteil 5 und das Basisteil 6 aus einkristallinem Silizium hergestellt. Die Wahl dieses Materials erlaubt die Anwendung erprobter Herstellungstechniken, wie sie beispielsweise aus der Halbleiterindustrie bekannt sind. Auf diese Weise können die einzelnen Kanäle auf fotolithographischem Weg, durch die Anwendung von Maskentechnologien und beispielsweise nasschemischen oder Plasma-Aetzschritten erstellt werden. Die Anwendung dieser aus der Halbleiterproduktion bekannten Technologien erlaubt eine reproduzierbare Herstellung einer Vielzahl von identischen Bauteilen. Die Verspiegelung der Oberflächen der Kanäle, bzw. zumindest des als Wechselwirkungsbereich dienenden Kanalstücks 21, erfolgt durch Oxidation des einkristallinen Siliziums unter Bildung einer SiO₂-Schicht genau einstellbarer Dicke. Auch die Unterseite des Deckelteils kann einfach durch Oxidation mit einer Reflexionsschicht versehen werden. Die Erstellung der Anschlussöffnungen 7-11 erfolgt gleichfalls auf fotolithographische Weise durch Aetzen ganz bestimmter Bereiche des einkristallinen Siliziums. Selbstverständlich könnten diese Oeffnungen aber auch mit Hilfe eines Lasers gebohrt werden. Es versteht sich, dass als Materialien für die Herstellung der Detektorzelle 4 nicht nur einkristallines Silizium in Frage kommt. Selbsverständlich können auch dem Silizium ähnliche Materialien aus der IV. Hauptgruppe des Periodensystems der Elemente und auch sogenannte III-V-Verbindungsmaterialien verwendet werden. Auch Quarz oder polykristalline Materialien und sogar amorphe Siliziumverbindungen und diesen ähnliche Verbindungen können eingesetzt werden. Anstatt der fotolithographischen Bearbeitungsmethoden zur Erstellung der Einstecköffnungen im Deckelteil und der Kanäle im Basisteil, könnten diese auch mit Hilfe mikromechanischer Bearbeitungsmethoden hergestellt werden. Der Grund für die besondere Bevorzugung des Siliziums, insbesondere einkristallinen Siliziums, liegt in seiner leichten Verfügbarkeit, in den erprobten Verarbeitungs- und Bearbeitungstechniken für Silizium und in seiner sehr guten chemischen Beständigkeit. Einkristallines Silizium wird in Scheiben von bis zu 8 Zoll Durchmesser geliefert. Berücksichtigt man, dass die Abmessungen erfindungsgemässer Detektorzelle 4 eine Länge von etwa 3 mm bis etwa 55 mm sowie eine Breite von nur etwa 3 mm bis etwa 10 mm vorsehen, so ist leicht einsichtig, dass auf diese Weise allein schon auf einer Scheibe einkristallinen Siliziums eine Vielzahl identischer Bauteile auf sehr kostengünstige Art hergestellt werden können. Die fertigen Bauteile (Deckelteile bzw. Basisteile) müssen nur noch aus der Scheibe herausgesägt werden. Die Dicke von Siliziumscheiben beträgt üblicherweise etwa 50 »m bis etwa 1000 »m. Berücksichtigt man, dass diese Dicke die Höhe eines einzelnen Bauteils, Deckelteil oder Basisteil, bestimmt, so resultieren daraus nach der Bearbeitung und Vereinzelung zusammengesetzte Detektorzellen, die eine Bauhöhe von nur etwa 150 »m bis etwa 2000 »m aufweisen. Ueblicherweise sind das Deckelteil 5 und das Basisteil 6 der Detektorzelle 4 miteinander verklebt oder anderswie dauerhaft verbunden. Sie könnten aber auch in einer gemeinsamen Halterung zusammengepresst aufeinander liegen. Die erfindungsgemässe Ausbildung der Detektorzelle weist ein genügend kleines Messkammervolumen (Volumen des Wechselwirkungsbereiches) auf, ohne dass dadurch die Nachweisgrenze im Vergleich zu den bekannten, konventionellen Zellen verschlechtert wird. Durch die miniaturisierte Ausbildung erfüllt die erfindungsgemäss Detektorzelle überdies die Voraussetzung für eine Integration in miniaturisierte Analysesysteme, wie sie in moderenen Kapillar- und Mikro-Trenntechniken von heute oder in Zukunft eingesetzt werden.

## Patentansprüche

1. Detektorzelle, insbesondere zur Absorptionsmessung von ultravioletter und/oder sichtbarer Strahlung in im wesentlichen in flüssiger Form vorliegenden Proben, mit Zu-und Abführöffnungen für die Einspeisung und den Abtransport der zu analysierenden Probe, mit einem Wechselwirkungsbereich für die Probe und die Messstrahlung, der mit den Zu- und Abführöffnungen in Verbindung steht, und mit Einleit- und Ableitöffnungen für die Messstrahlung, die in Verbindung mit dem Wechselwirkungsbereich stehen, wobei die Detektorzelle (4) ein Deckelteil (5) und ein Basisteil (6) umfasst dadurch gekennzeichnet, dass im wesentlichen alle Zu- und Abführöffnungen (7, 8, 9) und die Zu- und Ableitöffnungen (10, 11) für die Messstrahlung im Deckelteil (5) ausgespart sind, dass der Wechselwirkungsbereich als Kanalstück (21) eines Systems von Kanälen (17, 18, 19, 20, 21, 22) im Basisteil (6) ausgebildet ist, und dass das Kanalstück (21) zumindest im Bereich seines Bodens (26) und seiner Deckfläche (23) eine die Messstrahlung (R) gut reflektierende Oberfläche aufweist.

2. Detektorzelle nach Patentanspruch 1, dadurch gekennzeichnet, dass das Kanalstück (21) an seinen stirnseitigen Enden Seitenwände (25) aufweist, die mit dem Boden (26) des Kanalstücks (21 ) einen Winkel (α) von etwa 90° bis etwa 180°, insbesondere von etwa 110° bis etwa 150° einschliessen und eine die Messstrahlung (R) gut reflektierende Oberfläche aufweisen.

3. Detektorzelle nach Patentanspruch 1 oder 2, dadurch gekennzeichnet, dass das Kanalstück (21) ein Volumen von etwa 25 fl bis etwa 1 »l aufweist.

4. Detektorzelle nach einem der vorangehenden Patentansprüche, dadurch gekennzeichnet, dass die Deckfläche (23) des Kanalstücks (21) durch die mit einer die Messstrahlung (R) gut reflektierende Oberfläche versehene Unterseite des Deckelteils (5) gebildet ist.

5. Detektorzelle nach einem der vorangehenden Patentansprüche, dadurch gekennzeichnet, dass die Oeffnungen (7-11) im Deckelteil (5) als Einstecköffnungen derart ausgebildet sind, dass sich ihr Oeffnungsquerschnitt von der Oberseite des Deckelteils (5) zu seiner Unterseite über die Höhe des Deckelteils (5) verjüngt, stufenförmig verjüngt oder gleich bleibt.

6. Detektorzelle nach Patentanspruch 5, dadurch gekennzeichnet, dass die Anschlussöffnungen (7, 8, 9) für die Zu- und Abfuhr der Probe bzw. etwaiger weiterer Reagenzien zur Aufnahme von Kapillaren (14, 15, 16) mit Aussendurchmessern von etwa 50 »m bis etwa 1000 »m ausgebildet sind.

7. Detektorzelle nach Patentanspruch 6, dadurch gekennzeichnet, dass der kleinste Querschnitt der Einstecköffnungen (7, 8, 9) etwa dem Innenquerschnitt der verwendeten Kapillaren ( 14, 15, 16) entspricht.

8. Detektorzelle nach einem der vorangehenden Patentansprüche, dadurch gekennzeichnet, dass die Ein- und Ableitöffnungen (10, 11) im Deckelteil (5) für das Messlicht (R) als Einstecköffnungen für Lichtfaserleiter (12, 13) derart ausgebildet sind, dass sich ihr Oeffnungsquerschnitt über die Höhe des Deckelteils (5) zu seiner Unterseite hin verjüngt, stufenförmig verjüngt oder gleich bleibt.

9. Detektorzelle nach Patentanspruch 8, dadurch gekennzeichnet, dass der kleinste Querschnitt der Lichtfaserleiter-Einstecköffnungen (10, 11) etwa dem Kern der lichtleitenden Lichtfasern entspricht.

10. Detektorzelle nach einem der vorangehenden Patentansprüche, dadurch gekennzeichnet, dass das System von Kanälen im Basisteil (6) Zuführkanäle (17, 18) für die Probe und etwaige weitere Reagenzien und ähnliches, sowie ein Kanalsystem (20-21-22) umfasst, welches den Wechselwirkungsbereich enthält, dass die Zuführkanäle (17, 18) einerseits in das Kanalsystem (20-21-22) münden und andererseits mit den Zuführöffnungen (7, 8) im Deckelteil (5) in Verbindung stehen, und dass der ausgangsseitige Kanalabschnitt (22) des Kanalsystems (20-21-22) mit der Abführöffnung (9) im Deckelteil (5) in Verbindung steht.

11. Detektorzelle nach Patentanspruch 10, dadurch gekennzeichnet, dass die Zuführkanäle (17, 18) eine grössere Querschnittsfläche aufweisen als das Kanalsystem (20-21-22).

12. Detektorzelle nach einem der vorangehenden Patentansprüche, dadurch gekennzeichnet, dass das als Wechselwirkungsbereich dienende Kanalstück (21 ) eine Querschnittsfläche von etwa 0,25 »m² bis etwa 0,25 mm² aufweist, bei einer Kanaltiefe von etwa 0,5 »m bis etwa 500 »m.

13. Detektorzelle nach einem der vorangehenden Patentansprüche, dadurch gekennzeichnet, dass die Länge des Kanalstücks (21) von etwa 0,1 mm bis etwa 50 mm beträgt.

14. Detektorzelle nach einem der Patentansprüche 12 oder 13, dadurch gekennzeichnet, dass sie eine optische Weglänge s von etwa 0,1-100 mm aufweist.

15. Detektorzelle nach einem der vorangehenden Patentansprüche, dadurch gekennzeichnet, dass das Deckelteil (5) und/oder das Basisteil (6) aus einkristallinen, polykristallinen oder amorphen Materialien und/oder Verbindungen von Elementen der III., IV. und V. Hauptgruppe des Periodensystems der Elemente sind.

16. Detektorzelle nach Patentanspruch 15, dadurch gekennzeichnet, dass das Deckelteil (5) und/oder das Basisteil durch Anwendung fotolithographischer Masken- und Aetztechniken hergestellt sind.

17. Detektorzelle nach Patentanspruch 16, dadurch gekennzeichnet, dass das Basismaterial für die Deckel- und/oder Basisteile (5,6) einkristalline Siliziumscheiben von etwa 50 »m bis etwa 1000 »m Dicke sind.

18. Detektorzelle nach einem der vorangehenden Patentansprüche, dadurch gekennzeichnet, dass sie eine Länge von etwa 3 mm bis etwa 55 mm, eine Breite von etwa 3 mm bis etwa 10 mm sowie eine Höhe von etwa 150 »m bis etwa 2000 »m aufweist.

## Claims

1. A detector cell, especially for measuring the absorption of ultraviolet and/or visible radiation in samples substantially in liquid form, comprising inlet and outlet openings for the introduction and removal of the sample to be analysed, comprising an interaction region for the sample and the measuring radiation, which region is in communication with the inlet and outlet openings, and comprising entry and exit openings for the measuring radiation which are in communication with the interaction region, the detector cell (4) comprising a lid part (5) and a base part (6), wherein substantially all of the inlet and outlet openings (7, 8, 9) and the entry and exit openings (10, 11) for the measuring radiation are recessed in the lid part (5), the interaction region is constructed as a channel piece (21) of a system of channels (17, 18, 19, 20, 21, 22) in the base part (6), and the channel piece (21) has, at least in the region of its base (26) and its top face (23), a surface that reflects the measuring radiation (R) well.

2. A detector cell according to patent claim 1, wherein the channel piece (21) has at its ends side walls (25) which form with the base (26) of the channel piece (21) an angle (α) of from about 90° to about 180°, especially from about 110° to about 150°, and have a surface that reflects the measuring radiation (R) well.

3. A detector cell according to patent claim 1 or patent claim 2, wherein the channel piece (21) has a volume of from about 25 fl to about 1 »l.

4. A detector cell according to any one of the preceding patent claims, wherein the top face (23) of the channel piece (21) is formed by the underside of the lid part (5) provided with a surface that reflects the measuring radiation (R) well.

5. A detector cell according to any one of the preceding patent claims, wherein the openings (7-11) in the lid part (5) are constructed as plug-in openings in such a manner that across the height of the lid part (5) from the upper side of the lid part (5) towards its underside their cross-section tapers, or tapers in steps or remains constant.

6. A detector cell according to patent claim 5, wherein the connection openings (7, 8, 9) for the introduction and removal of the sample and of any further reagents are constructed to receive capillary tubes (14, 15, 16) having external diameters of from about 50 »m to about 1000 »m.

7. A detector cell according to patent claim 6, wherein the smallest cross-section of the plug-in openings (7, 8, 9) approximately corresponds to the internal cross-section of the capillary tubes (14, 15, 16) used.

8. A detector cell according to any one of the preceding patent claims, wherein the entry and exit openings (10, 11) in the lid part (5) for the measuring light (R) are constructed as plug-in openings for fibre-optical light guides (12, 13) in such a manner that across the height of the lid part (5) towards its underside their cross-section tapers, or tapers in steps or remains constant.

9. A detector cell according to patent claim 8, wherein the smallest cross-section of the fibre-optical light guide plug-in openings (10, 11) approximately corresponds to the core of the light-conducting optical fibres.

10. A detector cell according to any one of the preceding patent claims, wherein the system of channels in the base part (6) comprises inlet channels (17, 18) for the sample and any further reagents and the like, and a channel system (20-21-22) comprising the interaction region, the inlet channels (17, 18) on the one hand lead to the channel system (20-21-22) and on the other hand are in communication with the inlet openings (7, 8) in the lid part (5), and the channel portion (22) of the channel system (20-21-22) which is at the outlet end is in communication with the removal opening (9) in the lid part (5).

11. A detector cell according to patent claim 10, wherein the inlet channels (17, 18) have a larger cross-sectional area than the channel system (20-21-22).

12. A detector cell according to any one of the preceding patent claims, wherein the channel piece (21) serving as the interaction region has a cross-sectional area of from about 0.25 »m² to about 0.25 mm² with a channel depth of from about 0.5 »m to about 500 »m.

13. A detector cell according to any one of the preceding patent claims, wherein the length of the channel piece (21) is from about 0.1 mm to about 50 mm.

14. A detector cell according to patent claim 12 or patent claim 13, which has an optical path length s of about 0.1-100 mm.

15. A detector cell according to any one of the preceding patent claims, wherein the lid part (5) and/or the base part (6) consist(s) of monocrystalline, polycrystalline or amorphous materials and/or compounds of elements of main groups III, IV and V of the Periodic Table of the Elements.

16. A detector cell according to patent claim 15, wherein the lid part (5) and/or the base part are(is) manufactured by using photolithographic masking and etching techniques.

17. A detector cell according to patent claim 16, wherein the basic materials for the lid and/or base parts (5, 6) are monocrystalline silicon wafers of from about 50 »m to about 1000 »m in thickness.

18. A detector cell according to any one of the preceding patent claims, which has a length of from about 3 mm to about 55 mm, a width of from about 3 mm to about 10 mm and a height of from about 150 »m to about 2000 »m.

## Revendications

1. Cellule détectrice, destinée notamment à l'absorption d'une radiation ultraviolette et/ou visible dans un échantillon présenté sous forme essentiellement liquide, cette cellule comportant des passages d'admission et d'évacuation permettant d'introduire et de retirer l'échantillon analysé, un secteur d'interaction entre cet échantillon et le rayonnement de mesure, secteur qui communique avec ces ouvertures de passage d'admission et d'évacuation, ainsi que des ouvertures de passage d'entrée et de sortie de la radiation, qui communiquent avec ce secteur d'interaction, la cellule (4) comportant un élément-couvercle (5) et un élément de base (6) et étant caractérisée en ce que pratiquement toutes les ouvertures (7, 8, 9) de passage d'admission et d'évacuation et les ouvertures (10, 11) de passage d'entrée et de sortie de la radiation sont formés dans l'élément-couvercle (5), le secteur d'interaction étant un canal (21) qui fait partie d'un groupe de canaux (17, 18, 19, 20, 21, 22) formés dans l'élément de base (6) et ce canal (21) présentant, tout au moins sur son fond (26) et sur sa paroi supérieure (23), une surface réfléchissant bien la radiation (R).

2. Cellule détectrice selon la revendication 1, caractérisée en ce que le canal (21) présente, à ses extrémités longitudinales, des parois latérales (25), qui font avec le fond (26) de ce canal (21) un angle (α) d'environ 90 à environ 180° et notamment d'environ 110 à environ 150° et qui présentent une surface réfléchissant bien la radiation (R).

3. Cellule détectrice selon la revendication 1 ou 2, caractérisée en ce que le canal (21) a un volume compris entre environ 25 fl et 1 »l.

4. Cellule détectrice selon l'une des revendications précédentes, caractérisée en ce que la face supérieure (23) du canal (21) est constituée par la face inférieure de l'élément-couvercle (5) ; laquelle présente une surface réfléchissant bien la radiation (R) de mesure.

5. Cellule détectrice selon l'une des revendications précédentes, caractérisée en ce que les ouvertures (7-11) de passage ménagées dans l'élément-couvercle (5) ont la conformation de passage d'encastrement, façonnés de façon que leur section diminue progressivement ou graduellement sur la hauteur de cet élément-couvercle (5), de sa face supérieure à sa face inférieure ou bien que cette section reste constante.

6. Cellule détectrice selon la revendication 5, caractérisée en ce que les ouvertures (7, 8, 9) pour le passage d'admission et d'évacuation de l'échantillon et autres réactifs sont conformées de manière à loger des capillaires (14, 15, 16) ayant un diamètre extérieur d'environ 50 à 1 000 »m.

7. Cellule détectrice selon la revendication 6, caractérisée en ce que la section minimale des ouvertures de passage à encastrement (7, 8, 9) correspond sensiblement au diamètre intérieur des capillaires (14, 15, 16) utilisés.

8. Cellule détectrice selon l'une des revendications précédentes, caractérisée en ce que les ouvertures (10, 11) de passage d'entrée et sortie de la radiation (R) de mesure, formées dans l'élément-couvercle (5) sont des ouvertures destinées à encastrer des conducteurs (12, 13) à fibre optique et sont conformées de façon que leur section diminue progressivement ou graduellement du haut vers le bas sur la hauteur de cet élément-couvercle (5) ou de façon que cette section reste constante.

9. Cellule détectrice selon la revendication 8, caractérisée en ce que la section minimale des ouvertures (10, 11) d'encastrement pour le passage des conducteurs à fibre optique correspond sensiblement à l'âme de ces fibres.

10. Cellule détectrice selon l'une des revendications précédentes, caractérisée en ce que le groupe de canaux de l'élément de base (6) inclut des canaux (17, 18) d'admission de l'échantillon et autres réactifs éventuels ainsi qu'un groupe (20, 21, 22) qui inclut le secteur d'interaction, ces canaux d'admission (17, 18) débouchant d'une part dans ces canaux (20, 21, 22) et communiquant d'autre part avec les ouvertures (7, 8) de passage d'admission ménagées dans l'élément-couvercle (5), et en ce que le canal (22) du groupe (20, 21, 22) de canaux, situé du côté de la sortie, communique avec l'ouverture (9) de passage d'évacuation ménagé dans cet élément-couvercle (5).

11. Cellule détectrice selon la revendication 10, caractérisée en ce que les canaux d'admission (17, 18) ont une section plus grande que celle des autres canaux (20, 21, 22) du groupe.

12. Cellule détectrice selon l'une des revendications précédentes, caractérisée en ce que le canal (21), qui sert de secteur d'interaction, a une section comprise entre environ 0,25 »m² et 0,25 mm² pour une profondeur comprise entre environ 0,5 »m et environ 500 »m.

13. Cellule détectrice selon l'une des revendications précédentes, caractérisée en ce que la longueur du canal (21) est comprise entre environ 0,1 et environ 50 mm.

14. Cellule détectrice selon l'une des revendications 12 ou 13, caractérisée en ce qu'elle a une longueur de trajet optique comprise entre environ 0,1 et 100 mm.

15. Cellule détectrice selon l'une des revendications précédentes, caractérisée en ce que l'élément-couvercle (5) et/ou l'élément de base (6) sont en des matières monocristallines, polycristallines ou amorphes, et/ou en des composés formés d'éléments des groupes III, IV et V de la Classification Périodique des Eléments.

16. Cellule détectrice selon la revendication 15, caractérisée en ce que l'élément-couvercle (5) et/ou l'élément de base (6) sont fabriqués par mise en oeuvre de traitements photolithographiques de gravure avec caches.

17. Cellule détectrice selon la revendication 16, caractérisée en ce que la matière de base pour les éléments-couvercles (5) et de base (6) est un silicium monocristallin en disques d'environ 50 à environ 1 000 »m d'épaisseur.

18. Cellule détectrice selon l'une des revendications précédentes, caractérisée en ce qu'elle a une longueur d'environ 3 mm à environ 55 mm, une largeur d'environ 3 mm à environ 10 mm et une hauteur d'environ 150 »m à environ 2 000 »m.
